# EUROPEAN PATENT APPLICATION

(11) **EP 3 460 738 A1**
(43) Date of publication of application: **27.03.2019**
(21) Application number: 17425091.0
(22) Date of filing: 25.09.2017
(51) Int. Cl.: G06Q 40/02, G06Q 20/38

(54) **METHOD FOR IMPLEMENTING THE IBAN PORTABILITY**

(71) Applicant: Iban Portability Project S.r.l., 21100 Varese (VA) (IT)
(72) Inventor: Russo, Enzo, 21100 Varese VA (IT)
(74) Representative: Perani & Partners S.p.A.

(57) **Abstract**

The present invention relates to a method of providing portability of an IBAN code, comprising the steps of: providing a network server (1) associated with a common bank platform and connected to the Internet; providing a default application (2) residing in the network server (1); accessing the default application (2) for generating a first user profile associated with a first bank (4); providing a first BIC code associated with the first user profile; accessing the default application (2) from the first user profile to provide a first IBAN code, to thereby associate the first IBAN code with the first BIC code. The method is characterized by providing a portability code associated with the first IBAN code; accessing the default application to generate a second user profile associated with a second bank (5); providing a second BIC code associated with the second user profile; providing the portability code to the second user profile; accessing the default application (2) using the second user profile and entering the portability code to associate the second BIC code with the first IBAN code related to the portability code and to dissociate the first BIC code from the first IBAN code.

## Description

### FIELD OF THE INVENTION

The present disclosure relates to a method of providing IBAN portability from one bank to another.

### Discussion of the related art

In the prior art, execution of a wire transfer requires precise knowledge of the bank details of a recipient. Namely, a wire transfer can be only executed if the International Bank Account Number, also known as IBAN, is known, and standardized identification of the recipient's bank account is provided, as required for SEPA (Single Euro Payments Area) payments. Furthermore, execution of a wire transfer requires knowledge of the BIC/SWIFT code, which allows identification of the recipient's financial institution, and is used for foreign payments and for SEPA payments.

The IBAN code is an alphanumeric code consisting of: two letters representing the Country (e.g. IT for Italy); two check digits; and a domestic Basic Bank Account Number (the BBAN code) for the account which is composed of at least 23 characters and identifies the domestic bank account number.

Therefore, the IBAN code was internationally defined for each European country by its respective central bank with the constraint of containing a series of characters that can identify the relevant bank.

In Italy, the BBAN is twenty-three characters long and is composed of: CIN (one character), ABI (five digits), CAB (five digits), Account number (twelve digits, possibly containing zeros from the left to complement a number of less than twelve digits).

Payments are made by SEPA Credit Transfer (also known as SCT), which was introduced by the European Payments Council at the beginning of 2008, and sets a series of rules for funds transfer between banks in the EU, and involves the payer's bank, the Clearing and Settlement Mechanism for wire transfers and the recipient's bank.

### Problem of the prior art

SEPA credit transfer was not designed to allow IBAN portability from one bank to another. Furthermore, since the IBAN is an account identification code, it cannot be associated with a different account without being modified.

Thus, in the prior art, if a user wants to switch banks, he/se must obtain a new IBAN code associated to his/her new current account. Therefore, he/she will have to notify the change to all his/her creditors and give then the new bank details for them to make wire transfers to his/her new current account each time he/she decides to switch banks. This will discourage users from switching banks and look for more competitive financial products and services that meet their particular needs.

### SUMMARY OF THE INVENTION

Therefore, the object of the present invention is to provide a method that allows IBAN transferability when a user switches banks, without changing the code.

### Advantages of the invention

In one embodiment, a method may be provided that affords IBAN portability from one bank to another without changing the code.

In one embodiment, a method may be provided that affords IBAN transferability without changing the code and neglecting its original semantic meaning.

Using a common bank platform, once bank and IBAN details have been received, a method can allow them to be transferred to another bank without having to change the code, while ensuring the safety of the transaction.

In one embodiment, a method can provide IBAN portability across a common platform that, using data shared by the banks, can track the dates in which each IBAN was generated ad the changes of the related BICs, in view of facilitating transparency and enhancing competition between banks in the services they offer to consumers.

### BRIEF DESCRIPTION OF THE DRA WINGS

The characteristics and advantages of the present invention will appear from the following detailed description of a possible practical embodiment, which is illustrated without limitation in the annexed drawing, in which Figure shows a possible implementation of a method of providing IBAN portability according to the present invention.

### DETAILED DESCRIPTION

Even when this is not expressly stated, the individual features as described with reference to the particular embodiments shall be intended as auxiliary to and/or interchangeable with other features described with reference to other exemplary embodiments.

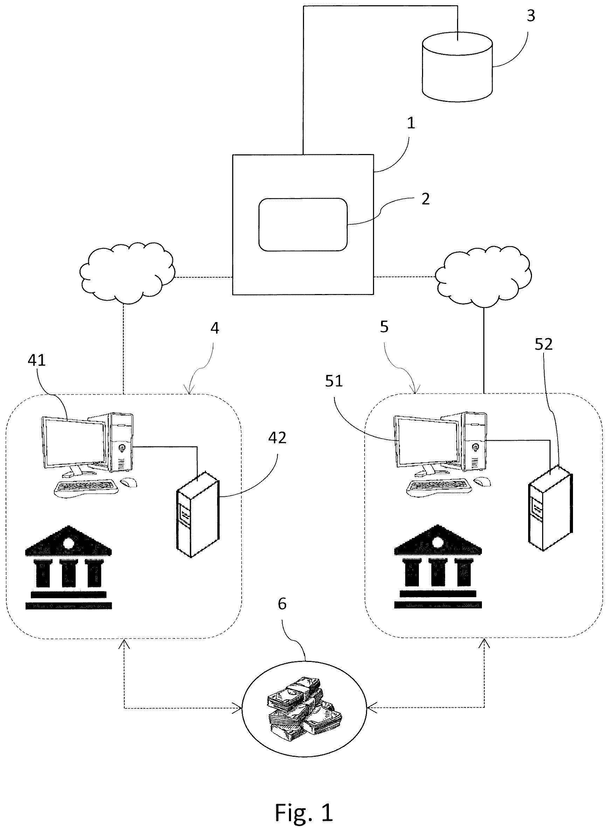

Referring to Figure 1, the present disclosure relates to a method of providing portability of the IBAN associated with a bank account.

The method of providing portability of an IBAN code comprises the step of providing a network server 1 associated with a common bank platform. The network server is connected to the Internet, by a wired network and/or via the cloud.

The method comprises the step of providing a default application 2 residing in the network server 1. Preferably, the default application 2 comprises a set of functions that are configured to carry out special tasks, such as allowing the creation of user profiles by entering and storing user data.

The method comprises a step of providing a database 3 in signal communication with the network server 1. Preferably, the database 3 comprises a repository architecture for data management.

The method comprises a step of accessing the default application 2 to generate a first user profile associated with a first bank 4. Preferably, the step of generating the first user profile comprises the substep of entering data of the first bank 4. Also preferably, the first bank 4 comprises at least one first processing unit 41, such as a computer, connected to a first server 42 for handling the data of the customers of the first bank 4 and for providing signal communication with the network server 1.

In other words, the method includes a step of registration by the financial institution, i.e. of the first bank 4, with the network server 1 of the common bank platform, through which details of the first participating bank 4, such as email, address and telephone number, may be entered.

The method comprises a step of providing a first BIC code associated with the first user profile.

The method comprises a step of accessing the default application 2 from the first user profile to provide a first IBAN code, to thereby associate the first IBAN code with the first BIC code.

The method comprises a step of providing a portability code associated with the first IBAN code. According to a preferred arrangement, the method comprises the step of generating the portability code using a hash function executed by the default application 2.

The method comprises a step of storing the first BIC code, the first IBAN code and the portability code into the database 3.

The method comprises a step of accessing the default application to generate a second user profile associated with a second bank 5. Preferably, the step of generating the second user profile comprises the substep of entering data of the second bank 5. Also preferably, the second bank 5 comprises at least one second processing unit 51, such as a computer, connected to a second server 52 for handling the data of the customers of the second bank 5 and for providing signal communication with the network server 1.

In other words, the method includes a step of registration by the financial institution, i.e. of the second bank 5, with the network server 1 of the common bank platform, through which details of second participating bank 5, such as email, address and telephone number, may be entered.

The method comprises a step of providing a second BIC code associated with the second user profile.

The method comprises a step of storing a second BIC code into the database 3.

The method comprises a step of providing the portability code to the second user profile. Preferably, this step is carried out by the first user profile through the default application.

The method comprises a step of accessing the default application 2 using the second user profile. The method includes entering the portability code into an appropriate string for the data acquisition provided by the default application 2, to associate the second BIC code with the first IBAN code related to the portability code and to dissociate the first BIC code from the first IBAN code.

It shall be noted that the method may be carried out iteratively for each first IBAN code associated with the customers of the first bank and the second bank 5. Indeed, each bank has at least one customer, holding at least one bank account associated with a respective IBAN code. The portability of the present method may be provided for each first IBAN code stored in the database 3.

According to a preferred arrangement, the method comprises the step of accessing the default application 2 using the second user profile to enter a second IBAN code associated with the second BIC code. Preferably, the step of accessing the default application 2 using the second user profile and enter the portability code comprises the substep of associating the second IBAN code with the first IBAN code.

According to a preferred arrangement, the method comprises the step of storing the second IBAN code into the database 3.

It shall be understood that, even if the second bank 5 must necessarily generate a second IBAN code when a customer switches banks, the common bank platform stores the second IBAN code and associates it with the first IBAN code, and also updates the second BIC code. This will afford portability to the user, who will still use his/her old IBAN (i.e. the first IBAN code) because the common bank platform has created a relation between the first IBAN code and the new bank details of the second bank 5, i.e. the second BIC code and the second IBAN code.

According to a preferred arrangement, the method comprises the step of providing a first API (Application Programming Interface) key associated with the first user profile and a second API key associated with the second user profile to access the default application 2, and be able to make payments. The API keys can be invoked by the financial institutions and allow the following steps to be carried out: i) entering the IBAN into the repository of the common bank platform, by providing the date of generation thereof, and the related BIC; once such data have been entered, the default application 2 of the common bank platform can generate the portability code through an algorithm, such as a hash function, which portability code will be forwarded to the first bank for use as a key between banks, such that the portability of the first IBAN code may successfully occur; (ii) checking the date of generation of first IBAN code, and the date of BIC switching for financial control institutions; (iii) checking the BIC, given the IBAN, for facilitating banks to check correct payment data; (iv) updating the BIC associated with the first IBAN code, which will be obtained by the new (second) bank 5 by entering the portability code that the old (first) bank shall have notified to it, which is a key required to ensure proper execution of IBAN portability.

According to a preferred arrangement, the method comprises the step of storing the date of generation of the first IBAN code associated with the first BIC code and/or the user's switching date associated with the second BIC code or the second IBAN code into the database 3.

According to a preferred arrangement, the method comprises the step of providing the data stored in the database 3 to confirm that payments have been made correctly.

According to a preferred arrangement, the method comprises the step of notifying the first user profile of the portability of the first IBAN code to the second user profile via the default application 2. In other words, the method includes a notification process, whereby the common bank platform will notify the previous (first) Bank holding the first IBAN code of the BIC code update, preferably with a wait time that is equal to a number of business days as decided by the platform, whereupon the update will be effective.

According to a preferred arrangement, the method comprises the step of updating the data of the second IBAN code in the database 3, such that the first IBAN code will be associated with at least the second BIC code, the portability code and the second IBAN code when providing portability of the first IBAN code from the first user profile to the second user profile.

According to a preferred arrangement, the method comprises the step of providing a common payment platform 6, which is configured to enable payments to the first bank 4 and the second bank 5. For example, the common payment platform 6 is the regulatory platform that allows for SEPA credit transfers.

Advantageously, a first bank 4 is capable of providing portability of the first IBAN code using the features provided by the default application 2 residing in the network server 1 of the common bank platform, by carrying out the method of the present invention, without neglecting SEPA rules.
A few brief exampled of the inventive method will be set forth below.

### EXAMPLE 1

The first bank 4 decides to register with the network server 1 of the common bank platform by accessing the default application 2, to provide an IBAN portability service to its customers. First, the first bank 4 connects on-line to the common bank platform and registers therewith using the default application 2, by entering its own geographic data, telephone number and email address. Once the registration data have been confirmed, it will be stored into the repository of the common bank platform, and the first bank 4 will receive a notification message in its email boxy, with a link for activation of its own (first) profile on-line. Upon activation, the first bank 4 may download the API keys and use the libraries that, for each first IBAN code in its database, will first allow it to carry out the OnBoarding step, by registering the following data into the repository of the platform: first IBAN code, date of generation of the first IBAN code and the first BIC code, and receiving a portability code for each first IBAN code registered. Once the OnBoarding step has been completed, the first bank 4 may make payments as follows: once the first bank 4 has received a request for wire transfer completion by one of its customers, it shall first use the API keys to check the BIC code corresponding to the IBAN that has been entered by the customer, because such IBAN might have been transferred from one bank to the other, and have lost its semantic meaning as a container of the ABI and CAB codes, that might not be those of the recipient's bank. By this check, the first bank 4 will make sure that the payment is routed to the proper recipient bank, once it has checked the BIC code through invocation of the API keys, and may thus follow the SEPA procedure.

### EXAMPLE 2

At a given date, the first bank 4 receives an account opening request by a new customer that has no IBAN code with other banks yet. Thus, once the first bank 4 has generated the first IBAN code, it may register by the default application 2 to invoke the API keys and enter the registration data (OnBoarding step), to thereby receive the portability code related to the first IBAN code and the first BIC code of the first bank 4. At a later date, the customer of the first bank 4 decides to effect portability of the first IBAN code to the second bank 5, which has already registered with the common bank platform via the preset application 2 and has already carried out the OnBoarding step. The first bank 4 shall privately notify the portability code of the first IBAN code to the second bank 5. Once the second bank 5 has received the portability code, it may invoke the API keys to enter the following data into the data forms provided by the default application 2: portability code, second IBAN code, IBAN code switching date, and second BIC code. This will update the BIC code associated with the first IBAN code. Once the portability code has been checked and found to be correct, the platform will notify the first bank 4 of the BIC code update request and, upon expiry of the business days' as set forth for notice, the update will be effective, unless otherwise decided by the first bank 4. At the end of the notification period, a trace of the old (first) BIC code will remain in the repository of the common bank platform, but the new (second) BIC code will be stored, and will be used from now on for payment routing. Assuming now that the International Financial Institution might want to check the payments of a given customer, upon registration with the platform, it will simply invoke the API keys and enter the IBAN of the customer to display all the BIC codes with their respective generation and switching dates, and the first related IBAN code.

Advantageously, the method of the present invention provides IBAN portability from one bank to another without requiring the code to be changed. After a step in which the bank registers with the common bank platform, the method comprises an OnBoarding process through which the bank forwards the IBAN codes, the code generation dates and the reference BICs in a single file, to be entered into the common bank platform which associates a portability code with each IBAN. The method includes a transition step, whereby the new bank, which has taken over the IBAN of the previous bank (the first IBAN code), must forward the IBAN associated with the new current account (second IBAN code), the take-over date and its own BIC (second BIC code) in a file, to facilitate updating of the common platform, which will track all the transitions and will check that BIC switching is valid, by notifying the previous bank and waiting a predetermined number of days before changes are effective. The common platform provides APIs to carry out several tasks, such as; providing the portability code, given the IBAN code; providing a BIC check, given the IBAN code; providing BIC switching, given the portability code, the new IBAN and the switching date; providing the dates of generation and switching (if any), given the IBAN code.

## Claims

1. A method of providing portability of an IBAN code, comprising the steps of:
- providing a network server (1) associated with a common bank platform and connected to the Internet;
- providing a default application (2) residing in said network server (1);
- providing a database (3) in signal communication with said network server (1);
- accessing said default application (2) to generate a first user profile associated with a first bank (4);
- providing a first BIC code associated with said first user profile;
- accessing said default application (2) from said first user profile to provide a first IBAN code, to thereby associate said first IBAN code with said first BIC code;
- said method being **characterized in that** it comprises the steps of:
- providing a portability code associated with said first IBAN code;
- storing said first BIC code and said first IBAN code and said portability code into said database (3);
- accessing said default application to generate a second user profile associated with a second bank (5);
- providing a second BIC code associated with said second user profile;
- storing said second BIC code into said database (3);
- providing said portability code to said second user profile;
- accessing said default application (2) from said second user profile and entering said portability code to associate said second BIC code with the first IBAN code related to said portability code and to dissociate said first BIC code from said first IBAN code.

2. A method as claimed in claim 1, including the steps of:
- accessing said default application (2) using said second user profile and entering a second IBAN code associated with said second BIC code;
wherein said step of accessing said default application (2) using said second user profile and entering said portability code comprises the substep of associating said second IBAN code with said first IBAN code.

3. A method as claimed in claim 2, comprising the step of storing said second IBAN code into said database (3).

4. A method as claimed in any of the preceding claims, comprising the step of providing a first API key associated with said first user profile and a second API key associated with said second user profile to access said default application (2) and be able to make payments.

5. A method as claimed in any of the preceding claims, comprising the step of storing the date of generation of said first IBAN code associated with said first BIC code and/or the user's switching date associated with said second BIC code into said database (3).

6. A method as claimed in any of the preceding claims, comprising the step of providing the data stored in the database (3) to confirm that payments have been made correctly.

7. A method as claimed in any of the preceding claims, comprising the step of generating said portability code using a hash function executed by said default application (2).

8. A method as claimed in any of the preceding claims, comprising the step of notifying said first user profile of the portability of said first IBAN code to said second user profile via said default application (2).

9. A method as claimed in any of claims 2 to 8, comprising the step of updating the data of said second IBAN code in the database (3), such that said first IBAN code will be associated with at least said second BIC code, said portability code and said second IBAN code when providing portability of said first IBAN code from said first user profile to said second user profile.

10. A method as claimed in any of the preceding claims, comprising the step of providing a common payment platform (6), which is configured to enable payments to said first bank (4) and said second bank (5).
